# EUROPEAN PATENT APPLICATION

(11) **EP 3 476 776 A1**
(43) Date of publication of application: **01.05.2019**
(21) Application number: 18201944.8
(22) Date of filing: 23.10.2018
(51) Int. Cl.: B65G 47/14

(54) **FEEDING SYSTEM**

(30) Priority: 25.10.2017 CN 201711015439
(71) Applicant: Tyco Electronics (Shanghai) Co., Ltd., China (Shanghai) Pilot Free Trade Zone Shanghai (CN); TE Connectivity Corporation, Berwyn, PA 19312 (US); Kunshan League Automechanism Co., Ltd., Kunshan City Jiangsu (CN)
(72) Inventor: DENG, Yingcong, Shanghai, Shanghai 200233 (CN); ZHANG, Dandan, Shanghai, Shanghai 200233 (CN); HU, Lvhai, Shanghai, Shanghai 200233 (CN); XIE, Fengchun, Shanghai, Shanghai 200233 (CN); LIU, Yun, Shanghai, Shanghai 200233 (CN); WU, Haidong, Kunshan City, Jiangsu (CN); XIAO, Hui, Kunshan City, Jiangsu (CN); LU, Roberto Francisco-Yi, Bellvue, WA Washington 98006 (US)
(74) Representative: Grünecker Patent- und Rechtsanwälte PartG mbB

(57) **Abstract**

A feeding system includes a hopper (100) having a discharge port at bottom, the hipper adapted to accommodate a plurality of different types of product components and configured such that the product components are adapted to flow out from the discharge port of the hopper (100) by their own weights; a sliding rail (300) having an upper end and a lower end, the sliding rail being obliquely disposed below the hopper (100) and being configured to receive the product components flowing out from the discharge port of the hopper; and a vibration excitation unit (500, 600) disposed at the lower end and configured to receive the product components, to separate the product components and to change a posture of the product components by virtue of vibration. The feeding system further includes a flow control gate (200) disposed at the discharge port, and a flow of the product components is adjustable by adjusting an opening degree of the flow control gate (200).

## Description

### CROSS-REFERENCE TO RELATED APPLICATION

This application claims the benefit of the Chinese Patent Application No. 201711015439.1 filed on October 25, 2017 in the State Intellectual Property Office of China and entitled with "FEEDING SYSTEM", the whole disclosure of which is incorporated herein by reference.

### Field of the DISCLOSURE

The present disclosure relates to a feeding system, and more particularly to a feeding system suitable for feeding product components.

### Description of the Related Art

In the field of electronic manufacturing, it may be usually necessary to mount various electronic components on a circuit board. In order to improve a manufacturing efficiency, an automatic feeding system is usually employed in the related art. An existing automatic feeding system typically includes a hopper and a vibration tray. The hopper is used to accommodate the electronic components to be fed. The electronic components may fall from a bottom discharge port of the hopper to the vibration tray. The vibration tray may reciprocally vibrate in one or more direction to change a posture of the electronic components fed to the vibration tray such that the electronic components are in a predetermined posture. When the electronic components are in the predetermined posture, the electronic components in the predetermined posture may be picked up by a manipulator.

However, in the related art, speeds of the electronic components falling from the bottom discharge port of the hopper are uncontrollable, which causes the speeds of the electronic components falling from the bottom discharge port of the hopper to not match the vibration frequency of the vibration tray. As a result, the feeding efficiency may be reduced.

### SUMMARY

According to an aspect of the disclosure, there is provided a feeding system including: a hopper having a discharge port at bottom of the hopper, the hipper being adapted to accommodate a plurality of different types of product components and being configured such that the product components are adapted to flow out from the discharge port of the hopper by their own weights; a sliding rail having an upper end at a high position and a lower end at a low position, the sliding rail being obliquely disposed below the hopper with respect to a horizontal plane and being configured to receive the product components flowing out from the discharge port of the hopper; and a vibration excitation unit disposed at the lower end of the sliding rail and configured to receive the product components that slide off the lower end of the sliding rail, to separate the product components fed to the vibration excitation unit and to change a posture of the product components by virtue of vibration. The feeding system further includes a flow control gate disposed at the discharge port of the hopper, and a flow of the product components flowing out from the discharge port of the hopper is adjustable by adjusting an opening degree of the flow control gate.

According to an exemplary embodiment of the disclosure, the plurality of different types of product components include electronic components, insulating components, metal components or semi-finished products.

According to another exemplary embodiment of the present disclosure, the vibration excitation unit includes a carrying table for carrying the product components and a vibration generator that drives the carrying table to vibrate.

According to another exemplary embodiment of the present disclosure, the carrying table is horizontally disposed with respect to the horizontal plane, the carrying table includes a smooth region having a smooth surface and a rough region having a rough surface, and the smooth region is located between the rough region and the lower end of the sliding rail.

According to another exemplary embodiment of the present disclosure, the feeding system further includes a gas blowing device adapted to blow the product components fed to the smooth region forward to the rough region.

According to another exemplary embodiment of the present disclosure, the gas blowing device includes a high pressure gas source and a gas blowing pipe connected to the high pressure gas source, and high pressure gas from the high pressure gas source is blown out through the gas blowing pipe to blow the product components to move forward on the carrying table.

According to another exemplary embodiment of the present disclosure, the opening degree of the flow control gate is adjustable such that the flow of the product components flowing out from the discharge port of the hopper matches the vibration frequency of the vibration excitation unit.

According to another exemplary embodiment of the present disclosure, the flow control gate is a manual flow control gate or an automatic flow control gate.

According to another exemplary embodiment of the present disclosure, the flow control gate is an automatic flow control gate controlled by a servo motor.

According to another exemplary embodiment of the present disclosure, the discharge port of the hopper is located at the upper end of the sliding rail, and the product components flowing out from the discharge port of the hopper directly fall to the upper end of the sliding rail and slide along the sliding rail to the lower end of the sliding rail.

According to another exemplary embodiment of the present disclosure, the lower end of the sliding rail rests directly on the carrying table such that the product components that slide out from the lower end of the sliding rail directly move onto the carrying table.

According to another exemplary embodiment of the present disclosure, the vibration generator is configured to drive the carrying table to reciprocally vibrate in at least one direction so as to separate the product components fed to the carrying table and so as to change the posture of the product components.

According to another exemplary embodiment of the present disclosure, the vibration generator is configured to drive the carrying table to reciprocally vibrate in at least one of a horizontal direction and a vertical direction.

According to another exemplary embodiment of the present disclosure, the feeding system further includes a vision system disposed above the carrying table so as to identify a location and the posture of the product components fed to the carrying table.

According to another exemplary embodiment of the present disclosure, the feeding system further includes a manipulator adapted to pick up the product components in a predetermined posture from the carrying table under visual guidance of the vision system.

According to another exemplary embodiment of the present disclosure, the vision system is movable up and down in a vertical direction to adjust a distance between the vision system and the carrying table in the vertical direction.

According to another exemplary embodiment of the present disclosure, the vision system includes: a vertical slide bar; a first slider slidably mounted on the vertical slide bar so as to be movable up and down along the vertical slide bar; and a camera mounted on the first slider so as to be movable up and down with the first slider.

According to another exemplary embodiment of the present disclosure, the vision system is movable in a horizontal direction to adjust the position of the vision system in the horizontal direction.

According to another exemplary embodiment of the present disclosure, the vision system includes: a vertical slide bar; a first slider slidably mounted on the vertical slide bar so as to be movable up and down along the vertical slide bar; a horizontal slide bar mounted to the first slider; a second slider slidably mounted on the horizontal slide bar so as to be horizontally movable along the horizontal slide bar; and a camera mounted on the second slider so as to be movable up and down with the first slider and so as to be horizontally movable with the second slider.

According to another exemplary embodiment of the present disclosure, the feeding system further includes a fixed base on which a plurality of support columns are disposed, and the hopper is supported on the support columns.

### BRIEF DESCRIPTION OF THE DRAWINGS

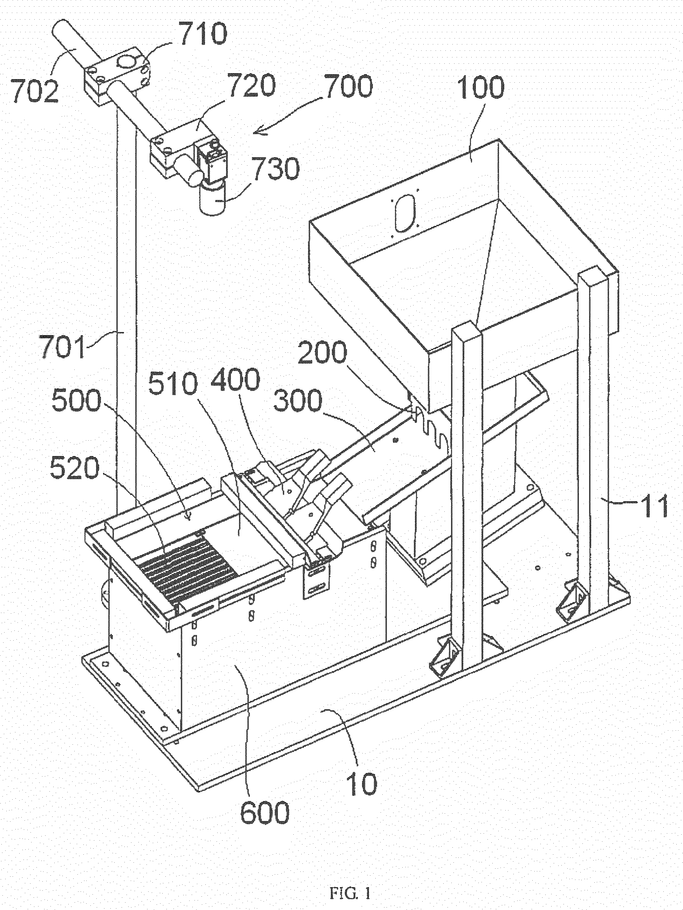

FIG. 1 shows a schematic perspective view of a feeding system in accordance with an exemplary embodiment of the present disclosure.

### DETAILED DESCRIPTION OF EMBODIMENTS

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In addition, in the following detailed description, for purposes of explanation, numerous specific details are set forth in order to provide a thorough understanding of the disclosed embodiments. However, it is apparent that one or more embodiments may also be implemented without these specific details. In other instances, well-known means and devices are schematically shown in the drawings to simplify the drawings.

According to a general technical concept of the present disclosure, there is provided a feeding system including: a hopper having a discharge port at bottom of the hopper, the hipper being adapted to accommodate a plurality of different types of product components and being configured such that the product components are adapted to flow out from the discharge port of the hopper by their own weights; a sliding rail having an upper end at a high position and a lower end at a low position, the sliding rail being obliquely disposed below the hopper with respect to a horizontal plane and being configured to receive the product components flowing out from the discharge port of the hopper; and a vibration excitation unit disposed at the lower end of the sliding rail and configured to receive the product components that slide off the lower end of the sliding rail, to separate the product components fed to the vibration excitation unit and to change a posture of the product components by virtue of vibration. The feeding system further includes a flow control gate disposed at the discharge port of the hopper, and a flow of the product components flowing out from the discharge port of the hopper is adjustable by adjusting an opening degree of the flow control gate.

FIG. 1 shows a schematic perspective view of a feeding system in accordance with an exemplary embodiment of the present disclosure.

As shown in FIG. 1, in the illustrated embodiment, the feeding system mainly includes: a hopper 100, a sliding rail 300, and a vibration excitation unit 500, 600.

As shown in FIG. 1, in the illustrated embodiment, the hopper 100 is adapted to accommodate various different types of product components. In an exemplary embodiment of the disclosure, the various different types of product components described above include, but are not limited to, electronic components, insulating components (such as plastic housings), metal components (such as conductive terminals), or semi-finished products.

As shown in FIG. 1, in the illustrated embodiment, the hopper 100 includes a discharge port at bottom thereof, and the product components are adapted to flow out from the discharge port of the hopper 100 by their own weights. The sliding rail 300 is obliquely disposed below the hopper 100 with respect to a horizontal plane, and has an upper end (right end in FIG. 1) at a high position and a lower end (left end in FIG. 1) at a low position so as to receive the product components flowing out from the discharge port of the hopper 100. The vibration excitation unit 500, 600 is disposed at the lower end of the sliding rail 300 and configured to receive the product components that slide off the lower end of the sliding rail 300.

As shown in FIG. 1, in the illustrated embodiment, the vibration excitation unit 500, 600 includes a carrying table 500 for carrying the product components and a vibration generator 600 that drives the carrying table 500 to vibrate.

As shown in FIG. 1, in the illustrated embodiment, the carrying table 500 is horizontally disposed relative to the horizontal plane. The carrying table 500 includes a smooth region (or called as a buffer region) 510 having a smooth surface, and a rough region 520 having a rough surface. The smooth region 510 of the carrying table 500 is located between the rough region 520 and the lower end of the sliding rail 300.

As shown in FIG 1, in the illustrated embodiment, the feeding system further includes a gas blowing device 400 adapted to blow the product components fed to the smooth region 510 forward to the rough region 520.

In an exemplary embodiment of the present disclosure, the gas blowing device 400 may include a high pressure gas source and an gas blowing pipe connected to the high pressure gas source, and the high pressure gas from the high pressure gas source is blown out through the gas blowing pipe to blow the product components to move forward on the carrying table 500.

As shown in FIG 1, in the illustrated embodiment, the feeding system further includes a flow control gate 200 disposed at the discharge port of the hopper 100. A flow of the product components flowing out from the discharge port of the hopper 100 is adjustable by adjusting an opening degree of the flow control gate 200. The term "flow of the product components" herein refers to the number of the product components that flow out from the discharge port of the hopper 100 per unit time.

In the present disclosure, since the flow of the product components flowing out from the discharge port of the hopper 100 can be adjusted by adjusting the opening degree of the flow control gate 200, the opening degree of the flow control gate 200 can be adjusted so that the flow of the product components flowing out from the discharge port of the hopper 100 matches the vibration frequency of the vibration excitation unit 500, 600. In this way, the feeding efficiency of the feeding system may be improved.

In one embodiment of the disclosure, the flow control gate 200 may be a manual flow control gate or may be an automatic flow control gate.

As shown in FIG 1, in the illustrated embodiment, the flow control gate 200 may be an automatic flow control gate controlled by a servo motor.

As shown in FIG. 1, in the illustrated embodiment, the discharge port of the hopper 100 is located at the upper end of the sliding rail 300, and the product components flowing out from the discharge port of the hopper 100 directly fall to the upper end of the sliding rail 300, and slide along the sliding rail 300 to the lower end of the sliding rail 300.

As shown in FIG. 1, in the illustrated embodiment, the lower end of the sliding rail 300 rests directly on the carrying table 500 such that the product components that slide out from the lower end of the sliding rail 300 directly move onto the carrying table 500.

As shown in FIG. 1, the vibration generator 600 may drive the carrying table 500 to reciprocally vibrate in at least one direction to separate the product components supplied to the carrying table 500 and change the posture (or orientation) of the product components.

As shown in FIG. 1, in the illustrated embodiment, the vibration generator 600 may drive the carrying table 500 to reciprocally vibrate in at least one of a horizontal direction and a vertical direction.

As shown in FIG. 1, in the illustrated embodiment, the feeding system further includes a vision system 700 disposed above the carrying table 500 for identifying a position and a posture of the product components supplied to the carrying table 500.

As shown in FIG. 1, in the illustrated embodiment, the feeding system may further include a manipulator adapted to pick up the product components in a predetermined posture (e.g. in a recumbent posture or an upright posture) from the carrying table 500 under visual guidance of the vision system 700.

As shown in FIG. 1, in the illustrated embodiment, the vision system 700 may further be moved in a horizontal direction to adjust the position of vision system 700 in the horizontal direction.

As shown in FIG. 1, in the illustrated embodiment, the vision system 700 mainly includes: a vertical slide bar 701; a first slider 710 slidably mounted on the vertical slide bar 701 so as to be movable along the vertical slide bar 701; a horizontal slide bar 702 mounted to the first slider 710; a second slider 720 slidably mounted on the horizontal slide bar 702 so as to be horizontally movable along the horizontal slide bar 702; and a camera 730 mounted on the second slider 720 so as to be vertically movable with the first slider 710 and so as to be horizontally movable with the second slider 720.

As shown in FIG 1, in the illustrated embodiment, the feeding system further includes a fixed base 10 on which a plurality of support columns 11 are disposed, and the hopper 100 is supported on the support columns 11.

As shown in FIG. 1, in the illustrated embodiment, the sliding rails 300, the vibration excitation unit 500, 600 and the vision system 700 each are supported on the fixed base 10.

Those skilled in the art can understand that the above-described embodiments are all exemplary, and may be modified by those skilled in the art. The structures described in the various embodiments can be freely combined without a conflict in structure or principle.

Although the present disclosure has been described with reference to the accompanying drawings, the embodiments disclosed in the accompanying drawings are intended to illustrate the preferred embodiments of the present disclosure exemplarily, and cannot be construed as a limitation of the present disclosure.

Although some embodiments according to the present general inventive concept have been shown and described, those skilled in the art will understand that modifications may be made to these embodiments without departing from the principle and spirit of the present general inventive concept. The scope of the disclosure is defined by the claims and their equivalents.

It should be noted that the wording "include", "including", "comprise", or "comprising" does not exclude other elements or steps, and the wording "a" or "an" does not exclude plural elements listed behind the wording. In addition, any reference sign in the claims will not be construed as a limitation to the scope of the present disclosure.

## Claims

1. A feeding system comprising:
a hopper (100) having a discharge port at bottom of the hopper, the hipper being adapted to accommodate a plurality of different types of product components and being configured such that the product components are adapted to flow out from the discharge port of the hopper (100) by their own weights;
a sliding rail (300) having an upper end at a high position and a lower end at a low position, the sliding rail being obliquely disposed below the hopper (100) with respect to a horizontal plane and being configured to receive the product components flowing out from the discharge port of the hopper; and
a vibration excitation unit (500, 600) disposed at the lower end of the sliding rail (300) and configured to receive the product components that slide off the lower end of the sliding rail (300), to separate the product components fed to the vibration excitation unit and to change a posture of the product components by virtue of vibration,
wherein the feeding system further comprises a flow control gate (200) disposed at the discharge port of the hopper (100), and a flow of the product components flowing out from the discharge port of the hopper (100) is adjustable by adjusting an opening degree of the flow control gate (200).

2. The feeding system according to claim 1,
wherein the vibration excitation unit (500, 600) comprises a carrying table (500) for carrying the product components and a vibration generator (600) that drives the carrying table (500) to vibrate.

3. The feeding system according to claim 2,
wherein the carrying table (500) is horizontally disposed with respect to the horizontal plane, the carrying table (500) comprises a smooth region (510) having a smooth surface and a rough region (520) having a rough surface, and the smooth region (510) is located between the rough region (520) and the lower end of the sliding rail (300).

4. The feeding system according to claim 3,
wherein the feeding system further comprises a gas blowing device (400) adapted to blow the product components fed to the smooth region (510) forward to the rough region (520), in particular, the gas blowing device (400) comprises a high pressure gas source and a gas blowing pipe connected to the high pressure gas source, and high pressure gas from the high pressure gas source is blown out through the gas blowing pipe to blow the product components to move forward on the carrying table (500).

5. The feeding system according to claim 1,
wherein the opening degree of the flow control gate (200) is adjustable such that the flow of the product components flowing out from the discharge port of the hopper (100) matches the vibration frequency of the vibration excitation unit (500, 600).

6. The feeding system according to claim 1,
wherein the flow control gate (200) is a manual flow control gate or an automatic flow control gate, in particular, the flow control gate (200) is an automatic flow control gate controlled by a servo motor.

7. The feeding system according to claim 1,
wherein the discharge port of the hopper (100) is located at the upper end of the sliding rail (300), and the product components flowing out from the discharge port of the hopper (100) directly fall to the upper end of the sliding rail (300) and slide along the sliding rail (300) to the lower end of the sliding rail (300).

8. The feeding system according to claim 1,
wherein the lower end of the sliding rail (300) rests directly on the carrying table (500) such that the product components that slide out from the lower end of the sliding rail (300) directly move onto the carrying table (500).

9. The feeding system according to claim 2,
wherein the vibration generator (600) is configured to drive the carrying table (500) to reciprocally vibrate in at least one direction, in particular in at least one of a horizontal direction and a vertical direction, so as to separate the product components fed to the carrying table (500) and to change the posture of the product components.

10. The feeding system according to claim 2,
wherein the feeding system further comprises a vision system (700) disposed above the carrying table (500) so as to identify a location and the posture of the product components fed to the carrying table (500).

11. The feeding system according to claim 10,
wherein the feeding system further comprises a manipulator adapted to pick up the product components in a predetermined posture from the carrying table (500) under visual guidance of the vision system (700).

12. The feeding system according to claim 10,
wherein the vision system (700) is movable up and down in a vertical direction to adjust a distance between the vision system (700) and the carrying table (500) in the vertical direction.

13. The feeding system according to claim 12, wherein the vision system (700) comprises:
a vertical slide bar (701);
a first slider (710) slidably mounted on the vertical slide bar (701) so as to be movable up and down along the vertical slide bar (701); and
a camera (730) mounted on the first slider (710) so as to be movable up and down with the first slider (710).

14. The feeding system according to claim 12,
wherein the vision system (700) is movable in a horizontal direction to adjust a position of the vision system (700) in the horizontal direction.

15. The feeding system according to claim 14, wherein the vision system (700) comprises:
a vertical slide bar (701);
a first slider (710) slidably mounted on the vertical slide bar (701) so as to be movable up and down along the vertical slide bar (701);
a horizontal slide bar (702) mounted to the first slider (710);
a second slider (720) slidably mounted on the horizontal slide bar (702) so as to be horizontally movable along the horizontal slide bar (702); and
a camera (730) mounted on the second slider (720) so as to be movable up and down with the first slider (710) and to be horizontally movable with the second slider (720).
